# EUROPEAN PATENT APPLICATION

(11) **EP 4 502 686 A1**
(43) Date of publication of application: **05.02.2025**
(21) Application number: 23212769.6
(22) Date of filing: 28.11.2023
(51) Int. Cl.: G02B 6/35, G02B 6/42

(54) **TUNABLE EDGE-COUPLED INTERFACE FOR SILICON PHOTONIC INTEGRATED CIRCUITS (PICS) AND METHOD FOR MAKING SAME**

(30) Priority: 31.07.2023 US 202318362033
(71) Applicant: INTEL Corporation, Santa Clara, CA 95054 (US)
(72) Inventor: CHIU, Chia-Pin, Tempe, 85284 (US); HOSSEINI, Kaveh, Livermore, 94550 (US)
(74) Representative: HGF

(57) **Abstract**

A tunable edge-coupled interface for photonic integrated circuits (PICs). The architecture can be identified by (1) an edge interface for optical coupling that exhibits a gap between an oxide cladding layer and the silicon substrate of the PIC die, (2) a perforated beam region above the gap in the oxide layer, wherein waveguide beams in the beam region provide a respective optical path for waveguides of the PIC, (3) actuator beams flanking the waveguide beams, the actuator beams include a heating element and are operated to tune the edge interface by inducing deflection of the edge interface, and (4) an application-specific target pitch of waveguides on the edge interface.

## Description

### BACKGROUND

Many multi-die package assemblies include, or co-package, an optical component with one or more electronic integrated circuits (EICs). The optical component, for example, a photonic integrated circuit (PIC), generally requires a precise alignment. In support of this, various passive and active optical alignment approaches have been developed to assure or optimize alignment efficiency. However, continued improvements to optical alignment approaches are desired.

### BRIEF DESCRIPTION OF THE DRAWINGS

FIGS. 1A, 1B, and 2A-2D are simplified views of a tunable edge-coupled silicon photonic integrated circuit (PIC) die, in accordance with various embodiments.
FIGS 3 and 4 are simplified views of an exemplary multi-die assembly or system including a tunable edge-coupled photonic integrated circuit (PIC) die, in accordance with various embodiments.

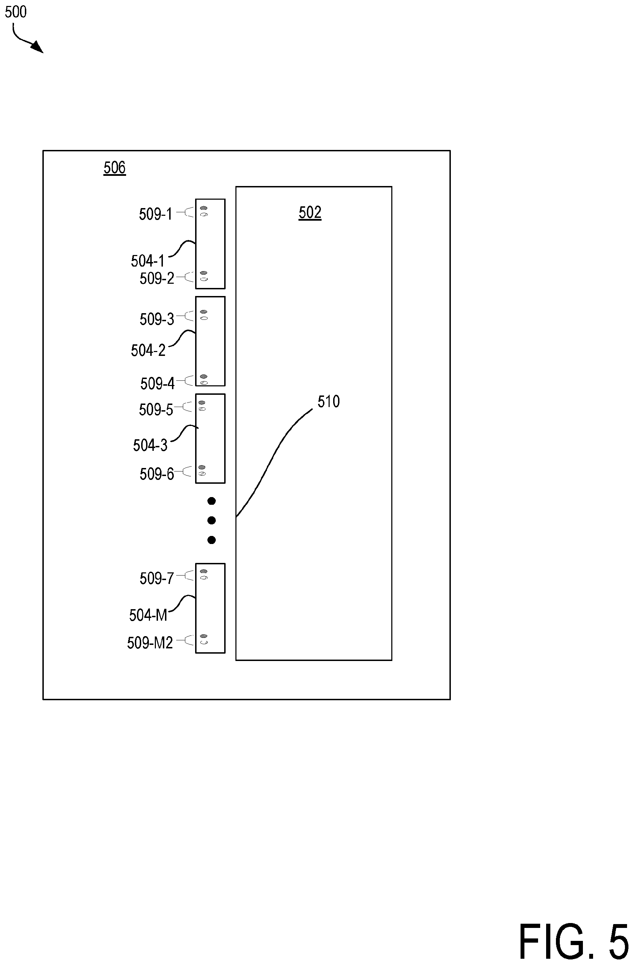

FIG. 5 is a simplified view of an exemplary system employing the tunable edge coupling methodology in a glass substrate.
FIGS. 6A - 6B are simplified views of embodiments of actuator layouts in a tunable edge-coupled PIC, in accordance with various embodiments.
FIG. 7 is an exemplary method for making a system including a photonic integrated circuit (PIC) die with a kinematically aligned optical connector, in accordance with various embodiments.
FIG. 8 is a simplified cross-sectional side view of a multi-chip package that includes a photonic integrated circuit (PIC) with an apparatus for optical alignment, in accordance with various embodiments.
FIG. 9 is a top view of a wafer and dies that may be included in a microelectronic assembly, in accordance with any of the embodiments disclosed herein.
FIG. 10 is a simplified cross-sectional side view showing an implementation of an integrated circuit on a die that may be included in various embodiments, in accordance with any of the embodiments disclosed herein.
FIG. 11 is a cross-sectional side view of a microelectronic assembly that may include any of the embodiments disclosed herein.
FIG. 12 is a block diagram of an example electrical device that may include any of the embodiments disclosed herein.

### DETAILED DESCRIPTION

The following detailed description is merely exemplary in nature and is not intended to limit the application and uses. It may be evident that the novel embodiments can be practiced without every detail described herein. For the sake of brevity, well known structures and devices may be shown in block diagram form to facilitate a description thereof.

In various optical modules, multi-die assemblies, and multi-die/chip packages (MCPs), a silicon photonic integrated circuit (PIC) is required to optically connect to another component, such as, a glass substrate, a fiber array unit (FAU), or another PIC. Often, the optical connection is localized to an edge of the PIC die (sometimes referred to as an edge-coupled interface or just edge interface). As may be appreciated, an increase in waveguide count (or fiber count) of a PIC die generally leads to a longer edge interface. Ensuring a robust edge interface (i.e., one with optimized optical alignment) with another component is technically challenging. The technical challenge is more acute for higher waveguide count PIC die, because a longer edge interface is vulnerable to insertion loss or optical misalignment based on warpage of a substrate to which it is attached. Further complicating these optical alignment issues, various MCP applications require that the pitch of the waveguides in the PIC die be translated to a target pitch for use an external component.

Various active and passive alignment schemes have been introduced to address aspects of these technical challenges. One solution introduces an extension component that fits between the PIC die and the external target component and provides the required optical coupling. The extension component matches the pitch of the PIC die waveguides on one end and translates that pitch to the target pitch on another end. These extension components can comprise a polymer material. These extension components can work well in some scenarios; however, they are vulnerable to the effects of increased waveguide count and warpage at the PIC die interface. Accordingly, it is desirable to provide improved optical alignment methods and apparatus.

The present disclosure provides a technical solution to the above-described problems related to optical alignment and provides an improvement over the limitations of available solutions, in the form of tunable edge-coupled interface for silicon photonic integrated circuits (PICs) and method for making same.

The disclosed tunable edge-coupled interface for PICs may be implemented with a silicon PIC component for optically coupling to an external glass substrate component, such as another PIC, a fiber array unit (FAU), or a glass substrate in which the PIC is embedded. Aspects of the disclosure are characterized by, and can be identified (e.g., using a TEM image) by (1) an edge interface for optical coupling that has a gap between an oxide cladding layer and a silicon substrate (i.e., viewed in a Z direction, as illustrated in the accompanying figures), (2) a perforated beam region in the oxide layer, wherein beams provide an optical path for waveguides, (3) one or more actuator beams comprising a heating element, the actuator beams can induce deflection of the edge interface as described herein, and (4) an application-specific target pitch on the edge interface. Embodiments can significantly improve the accuracy, reliability, yield/cost, and assembly throughput of the edge-coupled interface, which is one of the most technically challenging aspects of optical module or multi-die assembly. The tunable edge-coupled interface, its implementation in a PIC die and associated glass substrate, and an exemplary method for making same is described in more detail in connection with the figures below.

Exemplary embodiments will hereinafter be described in conjunction with the following drawing figures, wherein like numerals denote like elements. Figures are not necessarily to scale but may be relied on for spatial orientation and relative positioning of features. As may be appreciated, certain terminology, such as "ceiling" and "floor", as well as "upper,", "uppermost", "lower," "above," "below," "bottom," and "top" refer to directions based on viewing the Figures to which reference is made. Further, terms such as "front," "back," "rear,", "side", "vertical", and "horizontal" may describe the orientation and/or location of portions of the component within a consistent but arbitrary frame of reference which is made clear by reference to the text and the associated Figures describing the component under discussion. Such terminology may include the words specifically mentioned above, derivatives thereof, and words of similar import.

As used herein, the term "adjacent" refers to layers or components that are in direct physical contact with each other, with no layers or components in between them. For example, a layer X that is adjacent to a layer Y refers to a layer that is in direct physical contact with layer Y. In contrast, as used herein, the phrase(s) "located on" (in the alternative, "located under," "located above/over," or "located next to," in the context of a first layer or component located on a second layer or component) includes (i) configurations in which the first layer or component is directly physically attached to the second layer (i.e., adjacent), and (ii) component and configurations in which the first layer or component is attached (e.g. coupled) to the second layer or component via one or more intervening layers or components.

The term "overlaid" (past participle of "overlay") may be used to refer to a layer to describe a location and orientation for the layer but does not imply a method for achieving the location and orientation. For example, a first layer overlaid on a second layer, or overlaid on a component means that the first layer is spread across or superimposed on the second layer or component. Accordingly, a layer that is overlaid on a second layer may be viewed in a cross-sectional view as adjacent to the second layer.

As used herein, the term "electronic component" can refer to an active electronic circuit (e.g., processing unit, memory, storage device, FET) or a passive electronic circuit (e.g., resistor, inductor, capacitor).

As used herein, the term "integrated circuit component" can refer to an electronic component configured on a semiconducting material to perform a function. An integrated circuit (IC) component can comprise one or more of any computing system components described or referenced herein or any other computing system component, such as a processor unit (e.g., system-on-a-chip (SoC), processor core, graphics processor unit (GPU), accelerator, chipset processor), I/O controller, memory, or network interface controller, and can comprise one or more additional active or passive devices such as capacitors, decoupling capacitors, resistors, inductors, fuses, diodes, transformers, sensors, electrostatic discharge (ESD) devices, and memory devices.

A non-limiting example of an unpackaged integrated circuit component includes a single monolithic integrated circuit die (shortened herein to "die"); the die may include solder bumps attached to contacts on the die. When present on the die, the solder bumps or other conductive contacts can enable the die to be directly attached to a printed circuit board (PCB).

A non-limiting example of a packaged integrated circuit component comprises one or more integrated circuit dies mounted on a package substrate with the integrated circuit dies and package substrate encapsulated in a casing material, such as a metal, plastic, glass, or ceramic. Often the casing includes an integrated heat spreader (IHS); the packaged integrated circuit component often has bumps or leads attached to the package substrate for attaching the packaged integrated circuit component to a printed circuit board or motherboard.

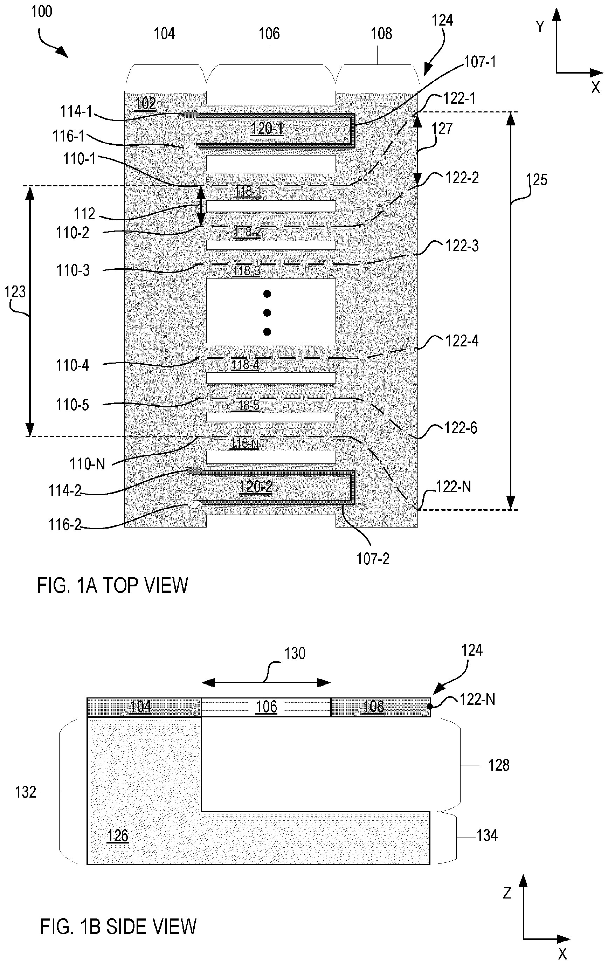

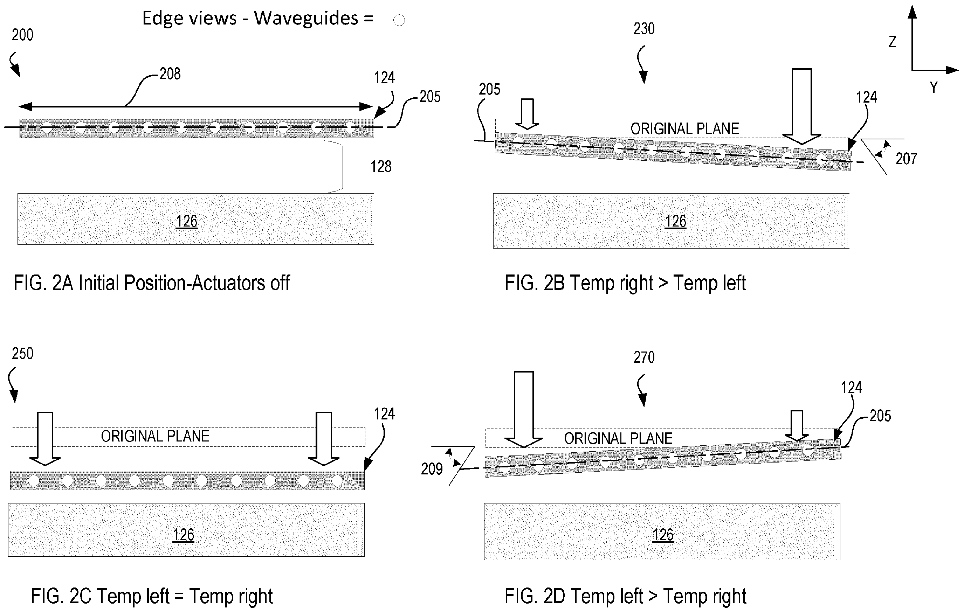

FIGS. 1A, 1B, and 2A-2D are simplified views of a tunable edge-coupled interface for photonic integrated circuit (PIC) die, in accordance with various embodiments. Embodiments are characterized by the geometry and spatial relationships described herein.

A photonic integrated circuit (PIC) 100 die comprising a silicon substrate 126 is illustrated. As may be appreciated, the PIC 100 die includes a miniaturized circuit that integrates various electric and photonic components, such as lasers, modulators, and detectors. Many PICs 100 have a plurality (N) of waveguides 110. The plurality of waveguides 110 corresponds to the above-discussed waveguide count or fiber count. Individual waveguides 110 may be routed differently around the silicon substrate and then collectively terminate at an edge interface 124 of the PIC 100 die, as described herein.

The silicon substrate 126 layer or core has a body region 132 that may be about 250-750 microns thick (wherein "about" means plus or minus 10%). The silicon waveguides 110 may comprise silicon nitride and originate in the body region 132 with a source pitch 112. The silicon waveguides in the beam region 106 may be encased in a transparent dielectric material or cladding layer (oxide layer 102) comprising oxygen and may include silicon dioxide (SiO2). In practice, it may be difficult to distinguish the transparent dielectric material of the oxide layer 102 from the silicon substrate 126 layer in a cross-sectional scanning electron microscopy (SEM) image, however, a non-limiting way to identify the described embodiments is to visually inspect both the materials present in a top down and/or cross-sectional view and the structure and shape of the materials to determine that the herein described architectures have been implemented. The silicon substrate has an edge region 134 with a second thickness that is less than the thickness of the body region 132.

The oxide layer 102 is located on the silicon substrate 126 as shown, such that the oxide layer overlays the body region 132 (portion 104, receiving the silicon waveguides 110 at the source pitch 112) and includes a ledge portion that extends over the thinner edge region 134. A gap 128 is formed between the ledge portion and the edge region 134. The oxide layer 102 may have a thickness in a range of about 30 microns to about 100 microns. The ledge portion is characterized by a beam region 106 and an expansion region 108.

In various embodiments, the beam region 106 architecture is as follows. In the beam region 106, a plurality of silicon waveguides is arranged substantially coplanar, with the source pitch 112, thereby consuming a source width 123 that is a function of the source, which is the PIC die architecture. The beam region 106 is so named because it appears in a top-down view (or X-Y axis view) to be perforated, having a plurality of coplanar parallel beams (similar to ceiling beams), the beams are formed in the oxide layer 102 and have a space between them, as illustrated. Beams in the beam region 106 have the same length (130). The beams in the beam region 106 comprise the same material as the oxide layer 102, and therefore the same coefficient of thermal expansion (CTE) as the oxide layer 102.

In the non-limiting example, the beam region 106 comprises a first actuator beam 120-1 including a first heating element 107-1, a second actuator beam 120-2 including a second heating element 107-2. The first heating element 107-1, a second actuator beam 120-2 including a second heating element 107-2comprise a different material than the material of the oxide layer 102 and are characterized by a different CTE than the oxide layer 102. The first actuator beam 120-1 and second actuator beam 120-2 have therebetween a plurality (N) of substantially coplanar waveguide beams (118-n for n = 1 to N). The waveguide beams 118-n include, or provide a path for, a respective silicon waveguide 110-n to extend from the body region to the expansion region 108.

The beam region 106 is contiguous with the expansion region 108, and the expansion region 108 terminates with the edge interface 124. Exiting the beam region 106, the silicon waveguides are arranged at a source pitch. At the edge interface 124, the silicon waveguides 110 are fanned out to silicon waveguides 122 to terminate in a substantially coplanar arrangement at the target pitch 127 dictated by an external component. In various embodiments, the source pitch may be about 25 microns, or 25 microns plus or minus 10%. At the edge interface 124, the silicon waveguides 122 consume a target width 125. The expansion region 108 provides, for the respective silicon waveguides 110-n, a respective optical path 122-n to the edge interface 124, arranged at a target pitch 127. Said differently, the expansion region 108 is a means for converting the arrangement of the plurality of silicon waveguides 110 from the source pitch 112 to the target pitch 127 at the edge interface 124.

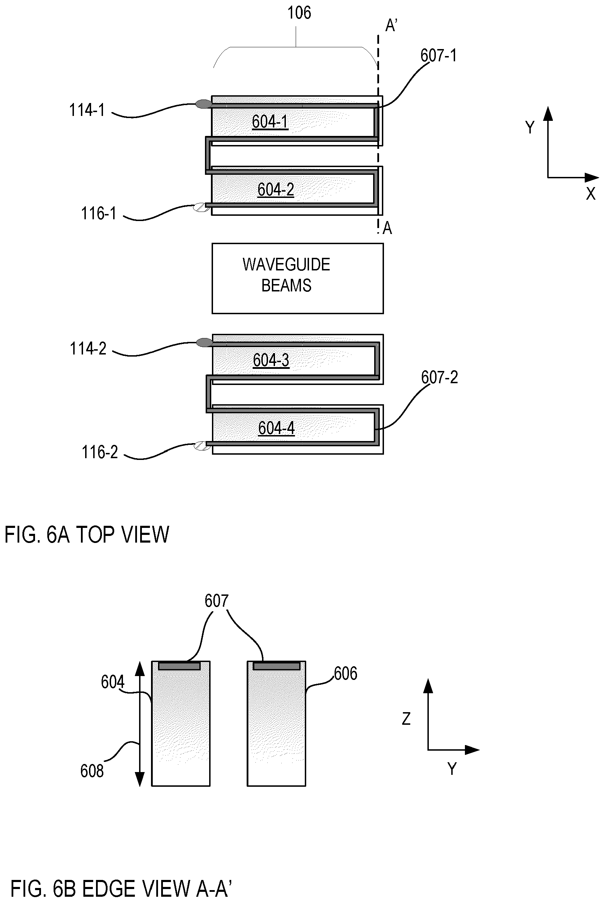

Actuators are embodied as actuator beams (120) include a heating element (107) or means for heating. Two or more actuator beams (120-1 and 120-2) have the waveguide beams (118) sandwiched therebetween. The actuator beams 120 may be considered a means for tuning the edge interface 124, as follows. As mentioned, the heating elements 107 comprise a material with a different coefficient of thermal expansion (CTE) than that of the oxide layer 102 of the actuator beams 120. In some embodiments, the heating elements 107 comprise a conductive trace including polysilicon. The actuation operation works as a function of the differing coefficients of thermal expansion (CTE). When the heating element 107 undergoes an increase in temperature ("heats up" "temperature increase"), such as, from having current driven through it, it responds to the heat based on the CTE. The heating element107 is located on the upper surface of the actuator beam (see, e.g., FIG. 6B), when the heating element107 heats up, it responds to the heat, the CTE differential of the two materials causes torque on the actuator beam 120, this manifests as an out-of-plane deflection or bend of the actuator beam 120. The deflection amount is related to the amount of heat in the heating element, which is in turn related to the control input (e.g., a voltage input). The actuator beams 120 are contiguous with the expansion region 108, thus their deflection is measurable at the edge interface 124, as the gap 128 size and shape (see, e.g., FIG. 2). Thus, by adjusting the heating in the actuators, the gap 128 can be controlled. Notably, the edge interface 124 remains a substantially coplanar arrangement having the target pitch 127, it just tilts or deflects responsive to the temperature increase of the heating element 107, as illustrated in FIG. 2A-2D.

Said differently, the heating elements 107 in the actuator beams 120 enable the actuator beams 120 to adjust the plane of the edge interface 124, thereby optimizing or tuning the optical coupling with an external component. The tuning achieved by the actuator beams 120 is measurable by measuring a gap 128 height along the lateral length of the edge interface (left to right in FIG. 2A-2D). Because controlling the gap 128 height, particularly, along the length (target width 125) of the edge interface 124, enables control of the optical coupling between the edge interface 124 and an external component, the provided actuator beams 120 may be considered a means for tuning the edge-coupled interface 124.

In various aspects of the invention, the heating element is embodied as a serpentine conductive trace comprising silicon, tracing out at least one loop around an actuator beam 120. Although the illustrations depict the at least one loop as being a regular "U" shape on a single actuator beam, in practice, the shape of either heating element/conductive trace 107-1 and/or heating element/conductive trace 107-2 may be irregular and may extend across more than one actuator beam (see, e.g., FIG. 6A, 6B). Additionally, in various embodiments, the width, height, and spacing (pitch) of the actuator beams 120 may not be the same as the width, height, and spacing (pitch) of the waveguide beams.

The first heating element 107-1 and/or the second heating element 107-2 may be controlled by at least one control input (114, 116) located external to the ledge portion. In practice, the control inputs (114, 116) may be soldering contacts. In various embodiments, a first control input 114-1 is operated in concert with a second control input 116-1 to control the first heating element 107-1, and a third control input 114-2 is operated in concert with a fourth control input 116-1 to control the second heating element 107-1. In some embodiments, the first control input 114-1 and the third control input 114-2 are the same, and the second control input 116-1 and the fourth control input 116-2 are the same. The control inputs may receive input from an electronic integrated circuit (EIC), from a package substrate, or from any other suitable source.

In a non-limiting practice example, control inputs 114-1 and 114-2 are voltage inputs and control inputs 116-1 and 116-2 may be ground terminals. Applying a voltage across the heating element 107 (e.g., by applying a voltage differential across first control input 114 and second control input 116), causes a current to travel in the heating element 107, which causes a temperature increase in the heating element 107. The temperature increase in the heating element 107 causes the aforementioned out-of-plane deflection of the actuator beam 120, due to the CTE mismatch between Poly-Si and the oxide layer (e.g., SiO2).

Turning now to FIGS. 2A-2D, and with continued reference to FIG. 1, the operation of the tunable edge-coupled interface is described with views in a Z-Y plane or edge view. In Embodiment 200, edge interface 124 has a lateral length 208 that is equal to or greater than the target width 125. The line 205 represents an edge view of a lateral plane that bisects the edge interface 124. The N waveguides 122 are arranged along this lateral plane; in practice, collectively, the waveguides 122 have a center axis and the waveguides 122 do not deviate up or down from the plane represented by the line 205 by more than +/- ten microns. In some embodiments, the waveguides 122 do not deviate up or down from the plane represented by the line 205 by more than 6 microns. Said differently, the N waveguides 122 are arranged substantially planar within the edge interface 124, and this holds true for the embodiments in FIGS. 2A-2D.

In embodiment 200, an initial position (original plane position) is illustrated, in which the heating elements 107 are not turned on, therefore the actuator beams 120 are off, and the gap 128 has an initial gap height (Z direction in the figures) that is substantially equal from left to right, such that the edge interface 124 is substantially parallel to an upper surface of the edge portion of the silicon substrate 126 as shown.

In embodiment 230, the left heating element is activated to create a left temperature and the right activator is activated to create a right temperature, and the temperature at the right is greater than the temperature at the left, which is indicated with a cartoon arrow on the right that is larger than a cartoon arrow on the left. The temperature applied by the actuators moves the entire edge interface 124 down from the original plane in the neutral position, and the temperature differential further causes the edge interface 124 to torque or deflect downward more at the right than the left. Note that the line 205 representing the plane in which the waveguides 122 are arranged remains the same, but the entire edge interface 124 is deflected down at angle 207 (the angle 207 is not to scale), this is the out-of-plane deflection described above). In this example, the gap height under the first actuator beam varies from a second gap height under the second actuator beam, by more than ten percent.

In embodiment 250 the left heating element is activated to create a left temperature and the right activator is activated to create a right temperature, and the temperature on the left is substantially equal to the temperature on the right, which is indicated with cartoon arrows of equal size on the left and the right. The temperature applied by the actuators moves the entire length of the edge interface 124 down closer to the upper surface of the edge portion of the silicon substrate 126, causing the gap to be substantially equal across the lateral length (left to right of the edge interface 124).

In embodiment 270 the left heating element is activated to create a left temperature and the right activator is activated to create a right temperature, and the temperature at the left is greater than the temperature at the right, which is indicated with a cartoon arrow on the left that is larger than a cartoon arrow on the right. The temperature applied by the actuators moves the entire edge interface 124 down from the original plane in the neutral position, and the temperature differential further causes the edge interface 124 to torque or deflect downward more at the left than the right. Note that the line 205 representing the plane in which the waveguides 122 are arranged remains the same, but the entire edge interface 124 is deflected down at angle 209 (the angle 209 is not to scale), this is the out-of-plane deflection described above). In this example, the gap height under the first actuator beam varies from a second gap height under the second actuator beam, by more than ten percent.

As illustrated in FIGS. 2A - 2D, there is a substantially linear relationship between an amount of temperature increase in a heating element 107 and a corresponding amount of downward deflection of the edge interface 124, observed at the actuator beam associated with the heating element that experienced the temperature increase. The increase in temperature in an actuator beam causes a deflection in the ledge portion, providing control over the spatial orientation of the substantially planar edge interface 124. The efficiency of the optical coupling with a target external component can be actively measured with a light source or can be interpreted by observing the precision of the mechanical alignment between the tunable edge-coupled interface 124 and the target external component, and with attention to the gap 128 along the target width 125 of the edge interface 124.

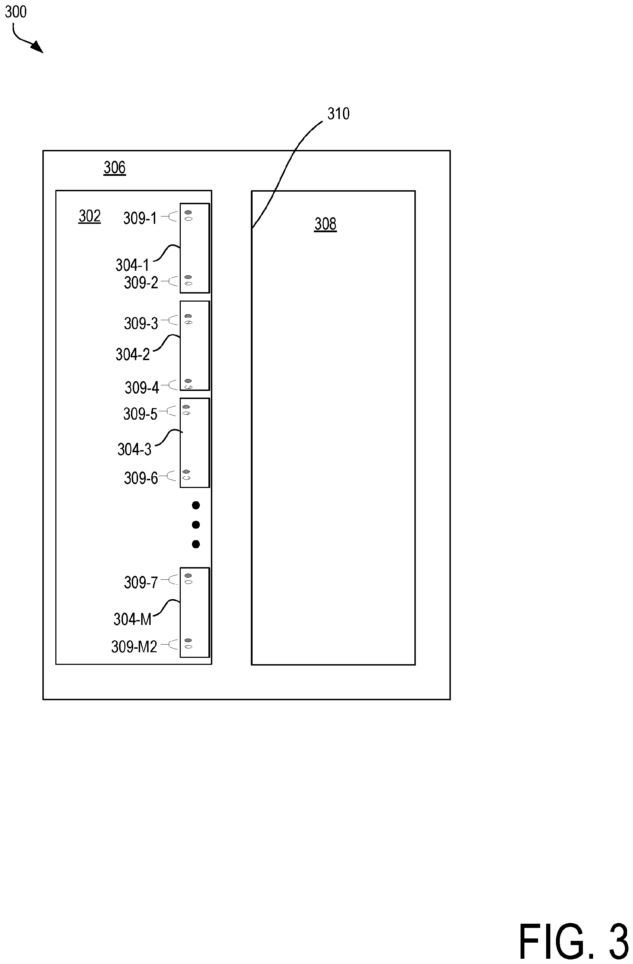

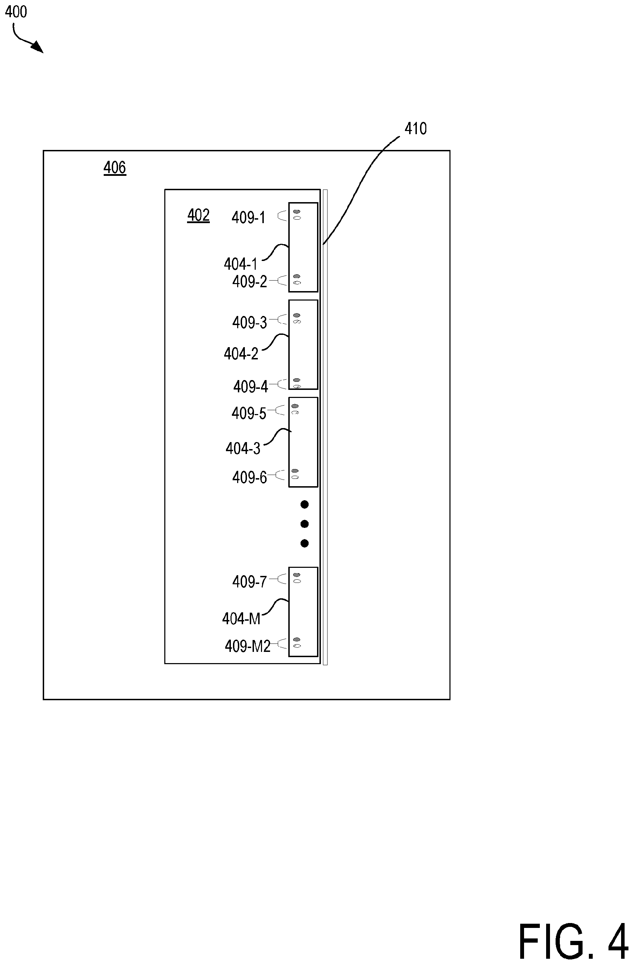

Having described the architecture of the tunable edge-coupled interface, examples of implementation are now introduced. As may be appreciated, the tunable edge-coupled interface architecture or apparatus may be considered a module, and in practice, a plurality of these modules may be implemented side by side to create a longer tunable edge-coupled interface for a PIC or similar component. Accordingly, FIGS 3 and 4 are simplified views of an exemplary multi-die assembly or system including a tunable edge-coupled photonic integrated circuit (PIC) die, in accordance with various embodiments.

Multi-die package 300 includes a PIC die 302 having multiple modules (304-1 to 304-M), each of the M modules may have a respective plurality (N) of waveguides, and respective sets of control inputs 309-1 and 309-2 for respective heating elements (control inputs illustrated include 309-3, 309-4, 309-5, 309-6, 309-7, to 309-M2). External component 308 has the target pitch along edge 310, to which the PIC die 302 is to optically couple. The PIC die 302 and a target external component 308 may further be attached to a package substrate 306. In an embodiment, component 308 is a fiber array unit (FAU). In another embodiment, component 308 is another PIC die.

In embodiment 400, the PIC die 402 is embedded (e.g., an ePIC) in a glass substrate 406, and the glass substrate 406 has the target pitch along edge 410, to which the PIC die 402 is to optically couple. As with FIG. 3, the PIC die 402 has multiple modules (404-1 to 404-M), each of the M modules may have a respective plurality (N) of waveguides, and respective sets of control inputs 409-1 and 409-2 for respective heating elements (control inputs illustrated include 409-3, 409-4, 409-5, 409-6, 409-7, to 409-M2).

As used herein, "glass" of the glass substrate can be an alkali-free alkaline earth boro-aluminosicilate glass, such as a glass comprising aluminum, oxygen, boron, silicon, and an alkaline-earth metal (e.g., beryllium, magnesium, calcium, strontium, barium, radium, such as a glass comprising SiO₂, Al₂O₃, B₂O₃, and MgO), or a photosensitive glass (photomachineable or photostructurable glass). In some embodiments, a photosensitive glass can be a glass that belongs to the lithium-silicate family of glass (e.g., a glass comprising lithium, silicon, and oxygen) comprising metallic particles, such as gold, silver, or other suitable metallic particles.

In embodiment 500, the PIC 502 is again embedded in a glass substrate 506, but in this example, the above-described tunable edge-coupled architecture is implemented in the glass substrate 506 in order to couple the glass substrate to edge 510 of the PIC 502 which has the target pitch. In this example, the glass substrate 506 has multiple modules (504-1 to 504-M), each of the M modules may have a respective plurality (N) of waveguides, and respective sets of control inputs 509-1 and 509-2 for respective heating elements (control inputs illustrated include 509-3, 509-4, 509-5, 509-6, 509-7, to 509-M2).

As may be appreciated by those with skill in the art, the provided examples are non-limiting, and this architecture and modular capacity may be implemented in a variety of other applications.

Returning briefly to the discussion of the heating element, some additional examples are provided in FIG. 6A and FIG. 6B. It was mentioned above that individual heating elements 107-1, 107-2 of an actuator do not necessarily have to have a regular shape, but they are substantially coplanar with the upper surface of the oxide layer 102. In the embodiment illustrated in FIG. 6A, heating elements 107-1, 107-2 may respectively be embodied as heating elements with more than one serpentine coil and respective serpentine coils may traverse more than one actuator beam. For example, actuator beams 604-1 and 604-2 are located alongside one another, and heating element 607-1 traverses both actuator beams 604-1 and 604-2. Similarly, actuator beams 604-3 and 604-4 lie alongside one another at the other side of the plurality of waveguide beams, and heating element 607-2 traverses both actuator beam 604-3 and 604-4.

Regardless of the number of serpentine coils and actuator beams that comprise an actuator, the heating elements 607-1 and 607-2 respectively are conductive traces configured to respond to the control inputs 114-1/116-1 and 114-2/116-2, as described in connection with FIG. 1. In FIG. 6B, a cross sectional edge view through the dashed line A-A' is illustrated, showing that the heating elements 607-1 and 607-2 are located at the upper surface of the oxide layer 102. FIGS 6A and 6B are non-limiting examples, and in practice a variety of other embodiments may be observed.

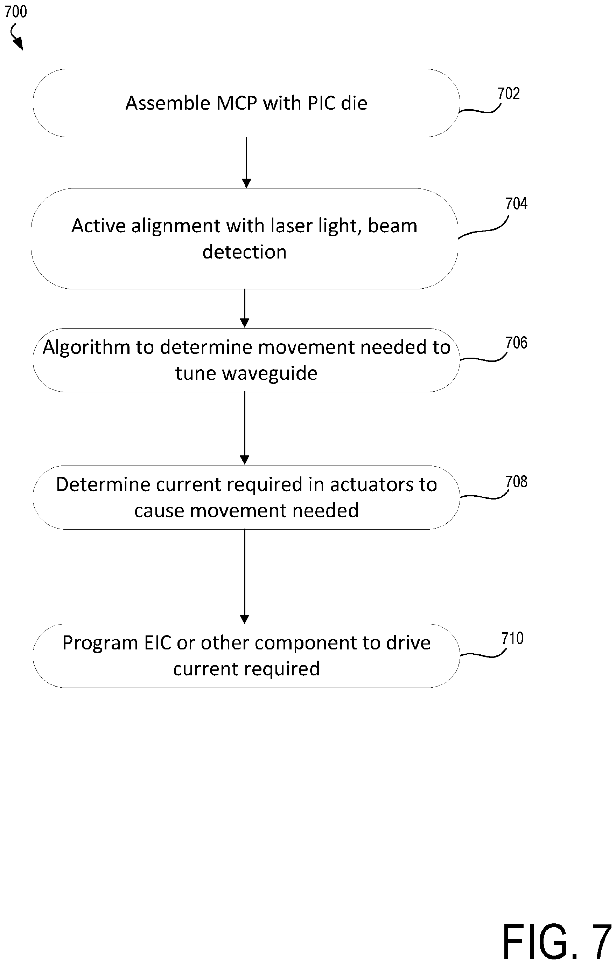

FIG. 7 is an exemplary method 700 for using a system having a tunable edge-coupled interface for a photonic integrated circuit (PIC) die, in accordance with various embodiments. At 702, a multi-chip package (MCP) is assembled with at least one PIC 100 die that includes a tunable edge-coupled interface architecture described herein, and an external component with the target pitch.

At 704, active alignment using a laser light source is performed. Beam detection at the exit/edge interface is used to evaluate optical coupling. At 706, an algorithm or set of decisions/rules is executed to determine an amount of movement and type of movement needed to achieve a deflection that will optimize the optical coupling through all the waveguides along the entire length of the edge interface 124. Said differently, at 706, the method identifies a deflection needed by the tunable edge-coupled interface to optimize optical coupling between the tunable edge-coupled interface and the target optical component.

In the case of multiple modules, the operations at 704 and 706 will be repeated for each module. This information may be stored.

At 708, the method determines, for the existing implemented actuators (beams and heating elements), what voltage or current is required in the actuators to cause the deflection and movement identified in 706. Again, in the case of multiple modules, the operations at 708 will be repeated for each module.

At 710, the EIC or another component in the MCP is programmed to provide the voltage or drive current determined at 708. Again, in the case of a plurality of modules that collectively define the tunable edge-coupled interface, the operations at 710 will be repeated for each module. After 710, the method may end.

Accordingly, various non-limiting embodiments of a system including a tunable edge-coupled interface for silicon photonic integrated circuits (PICs) have been provided. In the following description and figures, additional context and applications for the embodiments described above are provided.

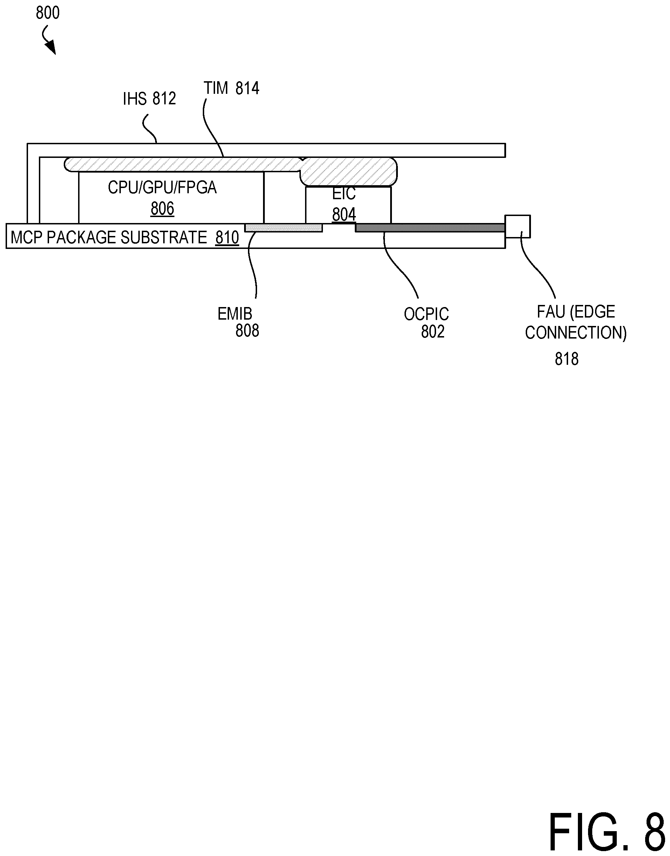

Turning now to FIG. 8, a PIC having the provided structure is implemented as an open cavity PIC (OCPIC) in a semiconductor assembly application, as may be assembled by a system integrator. A multi-die semiconductor assembly can be referred to as a multi-chip package (MCP) or, alternatively, a multi-chip module (MCM). FIG. 8 is a simplified cross-sectional side view of an exemplary multi-chip package (MCP) 800 that includes an OCPIC 802, in accordance with various embodiments. The MCP 800 may comprise one or more processor units, CPUs, graphics processors, or FPGAs, as represented by electronic integrated circuit (EIC) 804, and integrated circuit 806. In addition, the MCP 800 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets."

In some embodiments, the OCPIC 802 chiplet is embedded in a MCP package substrate 810 (and the substrate of the OCPIC substrate is distinguished therefrom as PIC substrate, which may or may not be the same as the MCP package substate). In other embodiments, the OCPIC 802 chiplet is attached to a MCP package substrate 810. The OCPIC 802 is adjacent to the EIC 804 that is configured specifically to receive and process data from the OCPIC 802. In practice, interconnections between the dies and/or chiplets of MCP 800 can be provided by the MCP package substrate 810, one or more silicon interposers, one or more silicon bridges 708 embedded in the package substrate 810 (such as Intel^{®} embedded multi-die interconnect bridges (EMIBs)), or combinations thereof. Silicon bridge 808 is shown to operationally couple the integrated circuit 806 with the electronic integrated circuit 804.

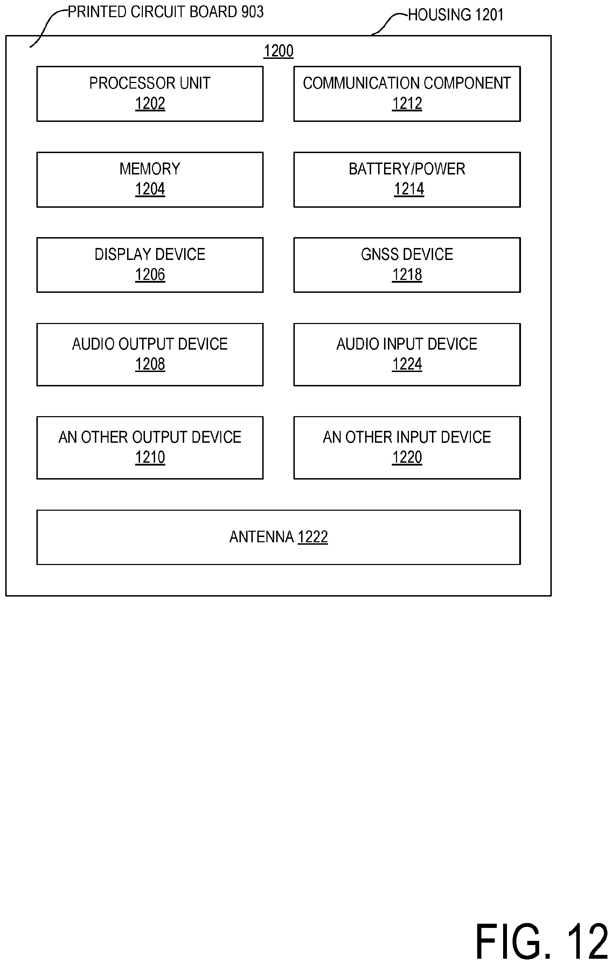

A thermal conduction layer interface material (TIM) 814 may be located over the integrated circuit 806 and the electronic integrated circuit 804. The TIM 814 can be any suitable material, such as a silver-particle filled thermal compound, thermal grease, phase change materials, indium foils or graphite sheets. An integrated heat spreader (IHS) 812, located on the TIM 814, covers the components of the MCP 800. In practice, the MCP 800, and the OCPIC 802 specifically, may communicate with other components in a device (e.g., device 1200, FIG. 12) via a fiber array unit (FAU) connector. In various embodiments, the FAU connector may be an edge connector 818, such as a micro-lens or V-groove.

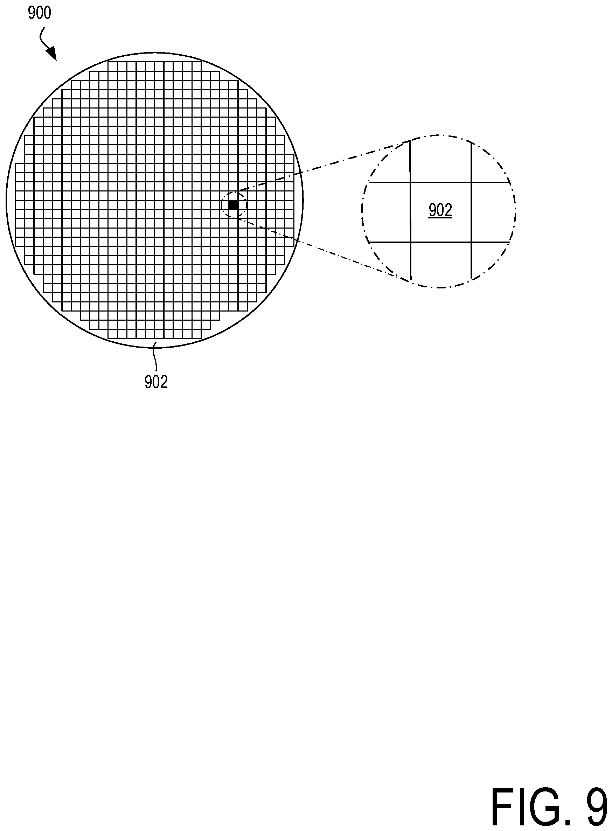

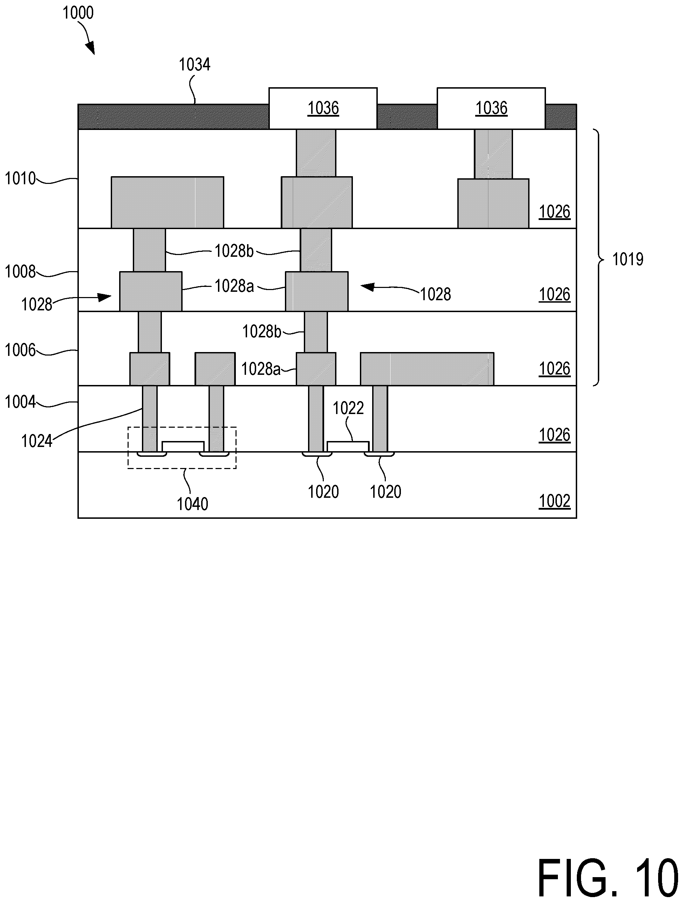

FIG. 9 is a top view of a wafer 900 and dies 902 that may be included in any of the embodiments disclosed herein. The wafer 900 may be composed of semiconductor material and may include one or more dies 902 formed on a surface of the wafer 900. After the fabrication of the integrated circuit components on the wafer 900 is complete, the wafer 900 may undergo a singulation process in which the dies 902 are separated from one another to provide discrete "chips" or destined for a packaged integrated circuit component. The individual dies 902, comprising an integrated circuit component, may include one or more transistors (e.g., some of the transistors 1040 of FIG. 10, discussed below), supporting circuitry to route electrical signals to the transistors, passive components (e.g., signal traces, resistors, capacitors, or inductors), and/or any other integrated circuit components. In some embodiments, the wafer 900 or the die 902 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Additionally, multiple devices may be combined on a single die 902. For example, a memory array formed by multiple memory devices may be formed on a same die 902 as a processor unit (e.g., the processor unit 1202 of FIG. 12) or other logic that is configured to store information in the memory devices or execute instructions stored in the memory array. In some embodiments, a die 902 may be attached to a wafer 900 that includes other die, and the wafer 900 is subsequently singulated, this manufacturing procedure is referred to as a die-to-wafer assembly technique.

FIG. 10 is a cross-sectional side view of an integrated circuit 1000 that may be included in any of the embodiments disclosed herein. One or more of the integrated circuits 1000 may be included in one or more dies 902 (FIG. 9). The integrated circuit 1000 may be formed on a die substrate 1002 (e.g., the wafer 900 of FIG. 9) and may be included in a die (e.g., the die 902 of FIG. 9).

The die substrate 1002 may be a semiconductor substrate composed of semiconductor material systems including, for example, n-type or p-type materials systems (or a combination of both). The die substrate 1002 may include, for example, a crystalline substrate formed using a bulk silicon or a silicon-on-insulator (SOI) substructure. In some embodiments, the die substrate 1002 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 1002. Although a few examples of materials from which the die substrate 1002 may be formed are described here, any material that may serve as a foundation for an integrated circuit 1000 may be used. The die substrate 1002 may be part of a singulated die (e.g., the dies 902 of FIG. 9) or a wafer (e.g., the wafer 900 of FIG. 9).

The integrated circuit 1000 may include one or more device layers 1004 disposed on the die substrate 1002. The device layer 1004 may include features of one or more transistors 1040 (e.g., metal oxide semiconductor field-effect transistors (MOSFETs)) formed on the die substrate 1002. The transistors 1040 may include, for example, one or more source and/or drain (S/D) regions 1020, a gate 1022 to control current flow between the S/D regions 1020, and one or more S/D contacts 1024 to route electrical signals to/from the S/D regions 1020.

The gate 1022 may be formed of at least two layers, a gate dielectric and a gate electrode. The gate dielectric may include one layer or a stack of layers. The one or more layers may include silicon oxide, silicon dioxide, silicon carbide, and/or a high-k dielectric material. The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be conducted on the gate dielectric to improve its quality when a high-k material is used.

The gate electrode may be formed on the gate dielectric and may include at least one p-type work function metal or n-type work function metal, depending on whether the transistor 1040 is to be a p-type metal oxide semiconductor (PMOS) or an n-type metal oxide semiconductor (NMOS) transistor. In some implementations, the gate electrode may comprise a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 1040 along the source-channel-drain direction, the gate electrode may comprise a U-shaped structure that includes a bottom portion substantially parallel to the surface of the die substrate 1002 and two sidewall portions that are substantially perpendicular to the top surface of the die substrate 1002. In other embodiments, at least one of the metal layers that form the gate electrode may simply be a planar layer that is substantially parallel to the top surface of the die substrate 1002 and does not include sidewall portions substantially perpendicular to the top surface of the die substrate 1002. In other embodiments, the gate electrode may comprise a combination of U-shaped structures and planar, non-U-shaped structures. For example, the gate electrode may comprise one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 1020 may be formed within the die substrate 1002 adjacent to the gate 1022 of individual transistors 1040. The S/D regions 1020 may be formed using an implantation/diffusion process or an etching/deposition process, for example. In the former process, dopants such as boron, aluminum, antimony, phosphorous, or arsenic may be ion-implanted into the die substrate 1002 to form the S/D regions 1020. An annealing process that activates the dopants and causes them to diffuse farther into the die substrate 1002 may follow the ion-implantation process. In the latter process, the die substrate 1002 may first be etched to form recesses at the locations of the S/D regions 1020. An epitaxial deposition process may then be conducted to fill the recesses with material that is used to fabricate the S/D regions 1020. In some implementations, the S/D regions 1020 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 1020 may be formed using one or more alternate semiconductor materials such as germanium or a group III-V material or alloy. In further embodiments, one or more layers of metal and/or metal alloys may be used to form the S/D regions 1020.

Electrical signals, such as power and/or input/output (I/O) signals, may be routed to and/or from the devices (e.g., transistors 1040) of the device layer 1004 through one or more interconnect layers disposed on the device layer 1004 (illustrated in FIG. 10 as interconnect layers 1006-1010). For example, electrically conductive features of the device layer 1004 (e.g., the gate 1022 and the S/D contacts 1024) may be electrically coupled with the interconnect structures 1028 of the interconnect layers 1006-1010. The one or more interconnect layers 1006-1010 may form a metallization stack (also referred to as an "ILD stack") 1019 of the integrated circuit 1000.

The interconnect structures 1028 may be arranged within the interconnect layers 1006-1010 to route electrical signals according to a wide variety of designs; in particular, the arrangement is not limited to the particular configuration of interconnect structures 1028 depicted in FIG. 10. Although a particular number of interconnect layers 1006-1010 is depicted in FIG. 10, embodiments of the present disclosure include integrated circuits having more or fewer interconnect layers than depicted.

In some embodiments, the interconnect structures 1028 may include lines 1028a and/or vias 1028b filled with an electrically conductive material such as a metal. The lines 1028a may be arranged to route electrical signals in a direction of a plane that is substantially parallel with a surface of the die substrate 1002 upon which the device layer 1004 is formed. For example, the lines 1028a may route electrical signals in a direction in and out of the page and/or in a direction across the page. The vias 1028b may be arranged to route electrical signals in a direction of a plane that is substantially perpendicular to the surface of the die substrate 1002 upon which the device layer 1004 is formed. In some embodiments, the vias 1028b may electrically couple lines 1028a of different interconnect layers 1006-1010 together.

The interconnect layers 1006-1010 may include a dielectric material 1026 disposed between the interconnect structures 1028, as shown in FIG. 10. In some embodiments, dielectric material 1026 disposed between the interconnect structures 1028 in different ones of the interconnect layers 1006-1010 may have different compositions; in other embodiments, the composition of the dielectric material 1026 between different interconnect layers 1006-1010 may be the same. The device layer 1004 may include a dielectric material 1026 disposed between the transistors 1040 and a bottom layer of the metallization stack as well. The dielectric material 1026 included in the device layer 1004 may have a different composition than the dielectric material 1026 included in the interconnect layers 1006-1010; in other embodiments, the composition of the dielectric material 1026 in the device layer 1004 may be the same as a dielectric material 1026 included in any one of the interconnect layers 1006-1010.

A first interconnect layer 1006 (referred to as Metal 1 or "M1") may be formed directly on the device layer 1004. In some embodiments, the first interconnect layer 1006 may include lines 1028a and/or vias 1028b, as shown. The lines 1028a of the first interconnect layer 1006 may be coupled with contacts (e.g., the S/D contacts 1024) of the device layer 1004. The vias 1028b of the first interconnect layer 1006 may be coupled with the lines 1028a of a second interconnect layer 1008.

The second interconnect layer 1008 (referred to as Metal 2 or "M2") may be formed directly on the first interconnect layer 1006. In some embodiments, the second interconnect layer 1008 may include via 1028b to couple the interconnect structures 1028 of the second interconnect layer 1008 with the lines 1028a of a third interconnect layer 1010. Although the lines 1028a and the vias 1028b are structurally delineated with a line within individual interconnect layers for the sake of clarity, the lines 1028a and the vias 1028b may be structurally and/or materially contiguous (e.g., simultaneously filled during a dual-damascene process) in some embodiments.

The third interconnect layer 1010 (referred to as Metal 3 or "M3") (and additional interconnect layers, as desired) may be formed in succession on the second interconnect layer 1008 according to similar techniques and configurations described in connection with the second interconnect layer 1008 or the first interconnect layer 1006. In some embodiments, the interconnect layers that are "higher up" in the metallization stack 1019 in the integrated circuit 1000 (i.e., farther away from the device layer 1004) may be thicker that the interconnect layers that are lower in the metallization stack 1019, with lines 1028a and vias 1028b in the higher interconnect layers being thicker than those in the lower interconnect layers.

The integrated circuit 1000 may include a solder resist material 1034 (e.g., polyimide or similar material) and one or more conductive contacts 1036 formed on the interconnect layers 1006-1010. In FIG. 10, the conductive contacts 1036 are illustrated as taking the form of bond pads. The conductive contacts 1036 may be electrically coupled with the interconnect structures 1028 and configured to route the electrical signals of the transistor(s) 1040 to external devices. For example, solder bonds may be formed on the one or more conductive contacts 1036 to mechanically and/or electrically couple an integrated circuit die including the integrated circuit 1000 with another component (e.g., a printed circuit board). The integrated circuit 1000 may include additional or alternate structures to route the electrical signals from the interconnect layers 1006-1010; for example, the conductive contacts 1036 may include other analogous features (e.g., posts) that route the electrical signals to external components.

In some embodiments in which the integrated circuit 1000 is a double-sided die, the integrated circuit 1000 may include another metallization stack (not shown) on the opposite side of the device layer(s) 1004. This metallization stack may include multiple interconnect layers as discussed above with reference to the interconnect layers 1006-1010, to provide conductive pathways (e.g., including conductive lines and vias) between the device layer(s) 1004 and additional conductive contacts (not shown) on the opposite side of the integrated circuit 1000 from the conductive contacts 1036.

In other embodiments in which the integrated circuit 1000 is a double-sided die, the integrated circuit 1000 may include one or more through silicon vias (TSVs) through the die substrate 1002; these TSVs may make contact with the device layer(s) 1004, and may provide conductive pathways between the device layer(s) 1004 and additional conductive contacts (not shown) on the opposite side of the integrated circuit 1000 from the conductive contacts 1036. In some embodiments, TSVs extending through the substrate can be used for routing power and ground signals from conductive contacts on the opposite side of the integrated circuit 1000 from the conductive contacts 1036 to the transistors 1040 and any other components integrated into the die having the integrated circuit 1000, and the metallization stack 1019 can be used to route I/O signals from the conductive contacts 1036 to transistors 1040 and any other components integrated into the die having the integrated circuit 1000.

Multiple integrated circuits 1000 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

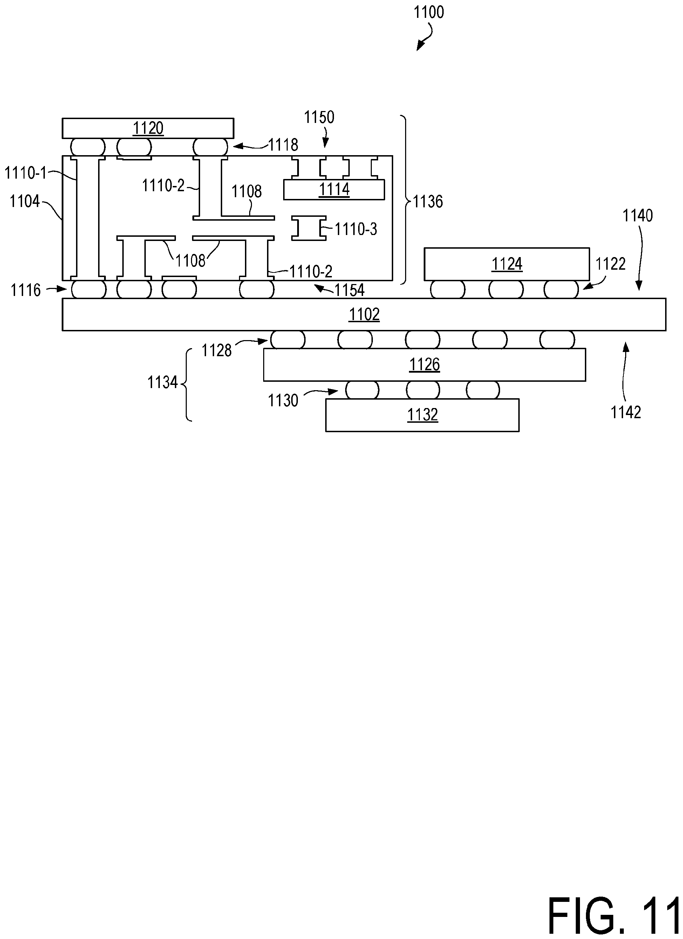

FIG. 11 is a cross-sectional side view of a microelectronic assembly 1100 that may include any of the embodiments disclosed herein. The microelectronic assembly 1100 includes multiple integrated circuit components disposed on a circuit board 1102 (which may be a motherboard, system board, mainboard, etc.). The microelectronic assembly 1100 may include components disposed on a first face 1140 of the circuit board 1102 and an opposing second face 1142 of the circuit board 1102; generally, components may be disposed on one or both faces 1140 and 1142.

In some embodiments, the circuit board 1102 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 1102. In other embodiments, the circuit board 1102 may be a non-PCB substrate. The microelectronic assembly 1100 illustrated in FIG. 11 includes a package-on-interposer structure 1136 coupled to the first face 1140 of the circuit board 1102 by coupling components 1116. The coupling components 1116 may electrically and mechanically couple the package-on-interposer structure 1136 to the circuit board 1102, and may include solder balls (as shown in FIG. 11), pins (e.g., as part of a pin grid array (PGA), contacts (e.g., as part of a land grid array (LGA)), male and female portions of a socket, an adhesive, an underfill material, and/or any other suitable electrical and/or mechanical coupling structure.

The package-on-interposer structure 1136 may include an integrated circuit component 1120 coupled to an interposer 1104 by coupling components 1118. The coupling components 1118 may take any suitable form for the application, such as the forms discussed above with reference to the coupling components 1116. Although a single integrated circuit component 1120 is shown in FIG. 11, multiple integrated circuit components may be coupled to the interposer 1104; indeed, additional interposers may be coupled to the interposer 1104. The interposer 1104 may provide an intervening substrate used to bridge the circuit board 1102 and the integrated circuit component 1120.

The integrated circuit component 1120 may be a packaged or unpackaged integrated circuit component that includes one or more integrated circuit dies (e.g., the die 902 of FIG. 9, the integrated circuit 1000 of FIG. 10) and/or one or more other suitable components.

The unpackaged integrated circuit component 1120 comprises solder bumps attached to contacts on the die. The solder bumps allow the die to be directly attached to the interposer 1104. In embodiments where the integrated circuit component 1120 comprises multiple integrated circuit dies; the dies can be of the same type (a homogeneous multi-die integrated circuit component) or of two or more different types (a heterogeneous multi-die integrated circuit component). In addition to comprising one or more processor units, the integrated circuit component 1120 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets." In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof. A packaged multi-die integrated circuit component can be referred to as a multi-chip package (MCP) or multi-chip module (MCM).

Generally, the interposer 1104 may spread connections to a wider pitch or reroute a connection to a different connection. For example, the interposer 1104 may couple the integrated circuit component 1120 to a set of ball grid array (BGA) conductive contacts of the coupling components 1116 for coupling to the circuit board 1102. In the embodiment illustrated in FIG. 11, the integrated circuit component 1120 and the circuit board 1102 are attached to opposing sides of the interposer 1104; in other embodiments, the integrated circuit component 1120 and the circuit board 1102 may be attached to a same side of the interposer 1104. In some embodiments, three or more components may be interconnected by way of the interposer 1104.

In some embodiments, the interposer 1104 may be formed as a PCB, including multiple metal layers separated from one another by layers of dielectric material and interconnected by electrically conductive vias. In some embodiments, the interposer 1104 may be formed of an epoxy resin, a fiberglass-reinforced epoxy resin, an epoxy resin with inorganic fillers, a ceramic material, or a polymer material such as polyimide. In some embodiments, the interposer 1104 may be formed of alternate rigid or flexible materials that may include the same materials described above for use in a semiconductor substrate, such as silicon, germanium, and other group III-V and group IV materials. The interposer 1104 may include metal interconnects 1108 and vias 1110, including but not limited to through hole vias 1110-1 (that extend from a first face 1150 of the interposer 1104 to a second face 1154 of the interposer 1104), blind vias 1110-2 (that extend from the first or second faces 1150 or 1154 of the interposer 1104 to an internal metal layer), and buried vias 1110-3 (that connect internal metal layers).

In some embodiments, the interposer 1104 can comprise a silicon interposer. Through silicon vias (TSV) extending through the silicon interposer can connect connections on the first face of a silicon interposer to an opposing second face of the silicon interposer. In some embodiments, an interposer 1104 comprising a silicon interposer can further comprise one or more routing layers to route connections on a first face of the interposer 1104 to an opposing second face of the interposer 1104.

The interposer 1104 may further include embedded devices 1114, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 1104. The package-on-interposer structure 1136 may take the form of any of the package-on-interposer structures known in the art. In embodiments where the interposer is a non-printed circuit board

The integrated circuit assembly 1100 may include an integrated circuit component 1124 coupled to the first face 1140 of the circuit board 1102 by coupling components 1122. The coupling components 1122 may take the form of any of the embodiments discussed above with reference to the coupling components 1116, and the integrated circuit component 1124 may take the form of any of the embodiments discussed above with reference to the integrated circuit component 1120.

The integrated circuit assembly 1100 illustrated in FIG. 11 includes a package-on-package structure 1134 coupled to the second face 1142 of the circuit board 1102 by coupling components 1128. The package-on-package structure 1134 may include an integrated circuit component 1126 and an integrated circuit component 1132 coupled together by coupling components 1130 such that the integrated circuit component 1126 is disposed between the circuit board 1102 and the integrated circuit component 1132. The coupling components 1128 and 1130 may take the form of any of the embodiments of the coupling components 1116 discussed above, and the integrated circuit components 1126 and 1132 may take the form of any of the embodiments of the integrated circuit component 1120 discussed above. The package-on-package structure 1134 may be configured in accordance with any of the package-on-package structures known in the art.

FIG. 12 is a block diagram of an example electrical device 1200 that may include one or more of the embodiments disclosed herein. For example, any suitable ones of the components of the electrical device 1200 may include one or more of the microelectronic assemblies 1100, integrated circuit components 1120, integrated circuits 1000, integrated circuit dies 902, or structures disclosed herein. A number of components are illustrated in FIG. 12 as included in the electrical device 1200, but any one or more of these components may be omitted or duplicated, as suitable for the application. In some embodiments, some or all the components included in the electrical device 1200 may be attached to one or more motherboards, mainboards, printed circuit boards 903, or system boards. In some embodiments, one or more of these components are fabricated onto a single system-on-a-chip (SoC) die. In various embodiments, the electrical device 900 is enclosed by, or integrated with, a housing 901.

Additionally, in various embodiments, the electrical device 1200 may not include one or more of the components illustrated in FIG. 12, but the electrical device 1200 may include interface circuitry for coupling to the one or more components. For example, the electrical device 1200 may not include a display device 1206, but may include display device interface circuitry (e.g., a connector and driver circuitry) to which a display device 1206 may be coupled. In another set of examples, the electrical device 1200 may not include an audio input device 1224 or an audio output device 1208, but may include audio input or output device interface circuitry (e.g., connectors and supporting circuitry) to which an audio input device 1224 or audio output device 1208 may be coupled.

The electrical device 1200 may include one or more processor units 1202 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 1202 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller crypto processors (specialized processors that execute cryptographic algorithms within hardware), server processors, controllers, or any other suitable type of processor units. As such, the processor unit can be referred to as an XPU (or xPU).

The electrical device 1200 may include a memory 1204, which may itself include one or more memory devices such as volatile memory (e.g., dynamic random access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 1204 may include memory that is located on the same integrated circuit die as the processor unit 1202. This memory may be used as cache memory (e.g., Level 1 (L1), Level 2 (L2), Level 3 (L3), Level 4 (L4), Last Level Cache (LLC)) and may include embedded dynamic random-access memory (eDRAM) or spin transfer torque magnetic random-access memory (STT-MRAM).

In some embodiments, the electrical device 1200 can comprise one or more processor units 1202 that are heterogeneous or asymmetric to another processor unit 1202 in the electrical device 1200. There can be a variety of differences between the processing units 1202 in a system in terms of a spectrum of metrics of merit including architectural, microarchitectural, thermal, power consumption characteristics, and the like. These differences can effectively manifest themselves as asymmetry and heterogeneity among the processor units 1202 in the electrical device 1200.

In some embodiments, the electrical device 1200 may include a communication component 1212 (e.g., one or more communication components). For example, the communication component 1212 can manage wireless communications for the transfer of data to and from the electrical device 1200. The term "wireless" and its derivatives may be used to describe circuits, devices, systems, methods, techniques, communications channels, etc., that may communicate data using modulated electromagnetic radiation through a nonsolid medium. The term "wireless" does not imply that the associated devices do not contain any wires, although in some embodiments they might not.

The communication component 1212 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra-mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 1212 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 1212 may operate in accordance with other wireless protocols in other embodiments. The electrical device 1200 may include an antenna 1222 to facilitate wireless communications and/or to receive other wireless communications (such as AM or FM radio transmissions).

In some embodiments, the communication component 1212 may manage wired communications, such as electrical, optical, or any other suitable communication protocols (e.g., IEEE 802.3 Ethernet standards). As noted above, the communication component 1212 may include multiple communication components. For instance, a first communication component 1212 may be dedicated to shorter-range wireless communications such as Wi-Fi or Bluetooth, and a second communication component 1212 may be dedicated to longer-range wireless communications such as global positioning system (GPS), EDGE, GPRS, CDMA, WiMAX, LTE, EV-DO, or others. In some embodiments, a first communication component 1212 may be dedicated to wireless communications, and a second communication component 1212 may be dedicated to wired communications.

The electrical device 1200 may include battery/power circuitry 1214. The battery/power circuitry 1214 may include one or more energy storage devices (e.g., batteries or capacitors) and/or circuitry for coupling components of the electrical device 1200 to an energy source separate from the electrical device 1200 (e.g., AC line power).

The electrical device 1200 may include a display device 1206 (or corresponding interface circuitry, as discussed above). The display device 1206 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 1200 may include an audio output device 1208 (or corresponding interface circuitry, as discussed above). The audio output device 1208 may include any embedded or wired or wirelessly connected external device that generates an audible indicator, such speakers, headsets, or earbuds.

The electrical device 1200 may include an audio input device 1224 (or corresponding interface circuitry, as discussed above). The audio input device 1224 may include any embedded or wired or wirelessly connected device that generates a signal representative of a sound, such as microphones, microphone arrays, or digital instruments (e.g., instruments having a musical instrument digital interface (MIDI) output). The electrical device 1200 may include a Global Navigation Satellite System (GNSS) device 1218 (or corresponding interface circuitry, as discussed above), such as a Global Positioning System (GPS) device. The GNSS device 1218 may be in communication with a satellite-based system and may determine a geolocation of the electrical device 1200 based on information received from one or more GNSS satellites, as known in the art.

The electrical device 1200 may include another output device 1210 (or corresponding interface circuitry, as discussed above). Examples of the other output device 1210 may include an audio codec, a video codec, a printer, a wired or wireless transmitter for providing information to other devices, or an additional storage device.

The electrical device 1200 may include another input device 1220 (or corresponding interface circuitry, as discussed above). Examples of the other input device 1220 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 1200 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra-mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 1200 may be any other electronic device that processes data. In some embodiments, the electrical device 1200 may comprise multiple discrete physical components. Given the range of devices that the electrical device 1200 can be manifested as in various embodiments, in some embodiments, the electrical device 1200 can be referred to as a computing device or a computing system.

Thus, embodiments of a structure for an open-cavity photonic integrated circuit (OCPIC) having a micro-ring resonator (MRR) have been provided. The provided embodiments advantageously enhance power efficiency of the MRR and the OCPIC. Embodiments enable the use of finer pitch architectures and high-density input/output (I/O) designs without impacting thermal efficiency.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. Various changes can be made in the function and arrangement of elements without departing from the scope of the disclosure as set forth in the appended claims and the legal equivalents thereof.

As used herein, phrases such as "an embodiment," "various embodiments," "some embodiments," and the like, indicate that some embodiments may have some, all, or none of the features described for other embodiments. "First," "second," "third," and the like describe a common object and indicate different instances of like objects being referred to; unless specifically stated, they do not imply a given sequence, either temporally or spatially, in ranking, or any other manner. In accordance with patent application parlance, "connected" indicates elements that are in direct physical or electrical contact with each other and "coupled" indicates elements that co-operate or interact with each other, coupled elements may or may not be in direct physical or electrical contact. Furthermore, the terms "comprising," "including," "having," and the like, are utilized synonymously to denote non-exclusive inclusions.

As used in this application and the claims, a list of items joined by the term "at least one of' or the term "one or more of" can mean any combination of the listed terms. For example, the phrase "at least one of A, B or C" can mean A; B; C; A and B; A and C; B and C; or A, B, and C. Likewise, the phrase "one or more of A, B and C" can mean A; B; C; A and B; A and C; B and C; or A, B, and C.

As used in this application and the claims, the phrase "individual of" or "respective of" following by a list of items recited or stated as having a trait, feature, etc., means that all the items in the list possess the stated or recited trait, feature, etc. For example, the phrase "individual of A, B, or C, comprise a sidewall" or "respective of A, B, or C, comprise a sidewall" means that A comprises a sidewall, B comprises sidewall, and C comprises a sidewall.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

### Examples

Example 1 is a photonic integrated circuit (PIC) die comprising: a substrate having a body region and an edge region, the substrate including silicon dioxide; a layer comprising oxide and having a first coefficient of thermal expansion (CTE), the layer located on the body region of the substrate and further having a ledge portion that forms a gap over the edge region; wherein the ledge portion comprises a beam region and an expansion region; wherein the beam region comprises a plurality of substantially coplanar waveguide beams arranged at a source pitch, a first actuator beam, and a second actuator beam; wherein the first actuator beam comprises a first heating element with a second CTE, and the second actuator beam comprises a second heating element with the second CTE; and wherein the expansion region includes an edge interface and provides an optical path for silicon waveguides in the waveguide beams to fan out to a target pitch at the edge interface.

Example 2 includes the subject matter of Example 1, wherein: the first actuator beam is configured to cause a first out-of-plane deflection of the edge interface, responsive to a first temperature increase in the first heating element; and the second actuator beam is configured to cause a second out-of-plane deflection of the edge interface, responsive to a second temperature increase in the second heating element.

Example 3 includes the subject matter of Example 2, wherein the first heating element and the second heating element comprise a respective conductive trace including polysilicon, and the first temperature increase or the second temperature increase is responsive to a current in the respective heating element.

Example 4 includes the subject matter of Example 2, wherein the first heating element and the second heating element are capable of being controlled by a voltage input.

Example 5 includes the subject matter of Example 2, wherein the first out-of-plane deflection and the second out-of-plane deflection cause a first gap height under the first actuator beam to be different from a second gap height under the second actuator beam, by more than ten percent.

Example 6 includes the subject matter of Example 1, wherein the source pitch is about 25 microns.

Example 7 includes the subject matter of Example 1, wherein the target pitch is in a range of about 100 microns to about 250 microns, or 100 microns +/- 10% to 250 microns +/- 10%.

Example 8 includes the subject matter of Example 1, further comprising a third actuator beam alongside the first actuator beam, and wherein the first actuator beam and the third actuator beam are traversed by the first heating element.

Example 9 includes the subject matter of Example 8, further comprising a fourth actuator beam located alongside the second actuator beam, and wherein the second actuator beam and the fourth actuator beam are traversed by the second heating element.

Example 10 is a multi-die package, comprising: a package substrate; a photonic integrated circuit (PIC) die comprising: a substrate having a body region and an edge region, the substrate including silicon dioxide; a layer comprising oxide and having a first coefficient of thermal expansion (CTE), the layer located on the body region of the substrate and further having a ledge portion that forms a gap over the edge region; wherein the ledge portion comprises a beam region and an expansion region; wherein the beam region comprises a plurality of substantially coplanar waveguide beams arranged at a source pitch, a first actuator beam, and a second actuator beam; wherein the expansion region includes an edge interface and provides an optical path for silicon waveguides in the waveguide beams to fan out to a target pitch at the edge interface; wherein the first actuator beam comprises a first heating element and is configured to cause a first out-of-plane deflection of the edge interface, responsive to a first temperature increase in the first heating element; wherein the second actuator beam comprises a second heating element and is configured to cause a second out-of-plane deflection of the edge interface, responsive to a second temperature increase in the second heating element; and a fiber array unit (FAU) defining the target pitch and optically coupled to the edge interface.

Example 11 includes the subject matter of Example 10, wherein the first heating element and the second heating element comprise a respective conductive trace including polysilicon, and the first temperature increase or the second temperature increase is responsive to a current in the respective heating element.

Example 12 includes the subject matter of Example 10, further comprising a processing unit and an electronic integrated circuit (EIC) attached to the package substrate and electrically coupled to the PIC die.

Example 13 includes the subject matter of Example 12, further comprising a heat spreader component located over the processing unit and the EIC die.

Example 14 includes the subject matter of Example 10, wherein the source pitch is about 25 microns.

Example 15 includes the subject matter of Example 10, wherein the target pitch is in a range of about 100 microns to about 250 microns.

Example 16 includes the subject matter of Example 10, wherein a first gap height under the first actuator beam is more than ten percent different from a second gap height under the second actuator beam.

Example 17 includes the subject matter of Example 10, further comprising a third actuator beam located alongside the first actuator beam, and wherein the first actuator beam and the third actuator beam are traversed by the first heating element.

Example 18 includes the subject matter of Example 17, further comprising a fourth actuator beam located alongside the second actuator beam, and wherein the second actuator beam and the fourth actuator beam are traversed by the second heating element.

Example 19 is a method, comprising: assembling a multi-die package that includes a photonic integrated circuit with a tunable edge-coupled interface and a target optical component; performing active alignment with a laser light source to identify a deflection needed by the tunable edge-coupled interface to optimize optical coupling between the tunable edge-coupled interface and the target optical component; determining a drive current needed to achieve the deflection; and programming an electronic integrated circuit (EIC) to provide the drive current.

Example 20 includes the subject matter of Example 19, further comprising repeating the performing, determining, and programming, for a plurality of modules that collectively define the tunable edge-coupled interface.

## Claims

1. A photonic integrated circuit (PIC) die comprising:
a substrate having a body region and an edge region, the substrate including silicon dioxide;
a layer comprising oxide and having a first coefficient of thermal expansion (CTE), the layer located on the body region of the substrate and further having a ledge portion that forms a gap over the edge region;
wherein the ledge portion comprises a beam region and an expansion region;
wherein the beam region comprises a plurality of substantially coplanar waveguide beams arranged at a source pitch, a first actuator beam, and a second actuator beam;
wherein the first actuator beam comprises a first heating element with a second CTE, and the second actuator beam comprises a second heating element with the second CTE; and
wherein the expansion region includes an edge interface and provides an optical path for silicon waveguides in the waveguide beams to fan out to a target pitch at the edge interface.

2. The PIC die of claim 1, wherein
the first actuator beam is configured to cause a first out-of-plane deflection of the edge interface, responsive to a first temperature increase in the first heating element; and
the second actuator beam is configured to cause a second out-of-plane deflection of the edge interface, responsive to a second temperature increase in the second heating element.

3. The PIC die of claim 1 or claim 2, wherein the first heating element and the second heating element comprise a respective conductive trace including polysilicon, and the first temperature increase or the second temperature increase is responsive to a current in the respective heating element.

4. The PIC die of claim 1 or claim 2, wherein the first heating element and the second heating element are controlled by a voltage input.

5. The PIC die of claim 2, wherein the first out-of-plane deflection and the second out-of-plane deflection cause a first gap height under the first actuator beam to be different from a second gap height under the second actuator beam, by more than ten percent.

6. The PIC die of any one of claims 1-5, wherein the source pitch is about 25 microns.

7. The PIC die of claim 6, wherein the target pitch is in a range of about 100 microns to about 250 microns.

8. The PIC die of any one of claims 1-5, further comprising a third actuator beam alongside the first actuator beam, and wherein the first actuator beam and the third actuator beam are traversed by the first heating element.

9. The PIC die of claim 8, further comprising a fourth actuator beam located alongside the second actuator beam, and wherein the second actuator beam and the fourth actuator beam are traversed by the second heating element.

10. The PIC die of any one of claims 1-4, and further comprising a fiber array unit (FAU) defining the target pitch and optically coupled to the edge interface.

11. The PIC die of claim 10, further comprising:
a package substrate attached to the PIC die; and
a processing unit and an electronic integrated circuit (EIC) attached to the package substrate and electrically coupled to the PIC die.

12. The PIC die of claim 11, further comprising a heat spreader component located over the processing unit and the EIC die.

13. The PIC die of claim 10 or claim 11, wherein a first gap height under the first actuator beam is more than ten percent different from a second gap height under the second actuator beam.

14. A method, comprising:
assembling a multi-die package that includes a photonic integrated circuit with a tunable edge-coupled interface and a target optical component;
performing active alignment with a laser light source to identify a deflection needed by the tunable edge-coupled interface to optimize optical coupling between the tunable edge-coupled interface and the target optical component;
determining a drive current needed to achieve the deflection; and
programming an electronic integrated circuit (EIC) to provide the drive current.

15. The method of claim 14, further comprising repeating the performing, determining, and programming, for a plurality of modules that collectively define the tunable edge-coupled interface.
